# EUROPEAN PATENT SPECIFICATION

(11) **EP 1 731 757 B1**
(45) Date of publication and mention of the grant of the patent: **26.01.2011**
(21) Application number: 05398005.8
(22) Date of filing: 07.06.2005
(51) Int. Cl.: F03B 17/06, F03B 7/00

(54) **Catamaran with profiled floats supporting a low head water wheel , serving also as bridge**
Katamaran mit zwei profilierten Pontons, die ein Wasserrad für niedrige Fallhöhen unterstützen, welche auch als Brücke dienen.
Catamaran avec deux flotteurs profilés soutenant une roue hydraulique de basse chute , servant également comme pont .

(43) Date of publication of application: 13.12.2006
(73) Proprietor: Produtora De Energia Eléctrica Por Hidro-Reaccao Unipessoal Lda-PEEHR, 2530-065 Lourinha (PT)
(72) Inventor: Dos Santos Costa, Antonio José Arsénio, 2530-065 Lourinha (PT)
(74) Representative: Ferreira Magno, Fernando Antonio

(56) References cited:
- WO-A-2004/090325
- WO-A-2005/035977
- DE-A1- 2 927 776
- DE-A1- 19 850 948
- GB-A- 2 223 063
- US-A- 1 797 089
- PONTA F ET AL: "An improved vertical-axis water-current turbine incorporating a channelling device" RENEWABLE ENERGY, PERGAMON PRESS, OXFORD, GB, vol. 20, no. 2, June 2000 (2000-06), pages 223-241, XP004243968 ISSN: 0960-1481

## Description

Prior art is disclosed in the patents JP 1986 000214910 and US 2003 016628.

This invention proposes a catamaran to create a net head that is maintained anchored in the middle of run-of-river streams, composed by two profiled floats attached symmetrically apart from each other to a floor plane, the floats corresponding to the edges and floor plane to the floor of a efficient channel defined between the floats and above the floor plane, comprising an inlet concentration zone, an outlet diffusion zone and an intermediate narrower zone where water flows with a strength higher than the outside stream strength moving a low head water wheel, the channel floor plane containing a blade nearby the outlet edge to increase the verified outlet depression, the inclination of the floor plane and the inclination of the blade being variable to adjust the channel net head, presenting immediately before the channel entrance a barrier of metallic net to avoid the entrance of fish and floating objects bigger than specific size into the channel, the floats sustaining a bridge that can be easily assembled to allow pedestrian and light loadings to cross between the river sides.

The invention refers to a catamaran that stands anchored at the middle of a river, tied to the river sides by means of cables and fixed to the river sides by means of stakes, composed by two determined profile floats (1a) attached to a floor plane (1b), the floats corresponding to the edges and the floor plane to ground of a channel, all together presenting a determined profile geometry with planar symmetry similar to the profile geometry of the hydroreactor with cylindrical symmetry described in patents EP 0924426 and US 6,013,955, the channel containing a narrower zone of determined width, where water flows with higher strength than the river stream, moving a low head water wheel (2), that drives electrical generator(s) (6) standing on the float(s) to produce electrical power, on each float there is one mount (3) comprising a fixed part (3a) and a movable part (3b) to sustain the said low head water wheel (2), and one mount (5) comprising a fixed part (5a) and a movable part (5b) to sustain a bridge (4), the said bridge including a middle tray (4a) between the mounts and two side trays (4b) each from one mount to the river side, allowing pedestrian or light loadings to cross between river sides.

The present invention is intended to profit from run-of-river streams, which never change their direction and way of flow, at high and low depth rivers. It is intended mainly for low depth rivers where no marine transportation is done in contrary to the hydroreactor with a cylindrical symmetry as described in patents EP 0924426 and US 6,013,955 determined to relatively deep rivers or relatively deep places at estuaries or at the sea where there could be marine traffic and the streams may change their direction and way.

A further water power device is disclosed in US-A-1 797 089.

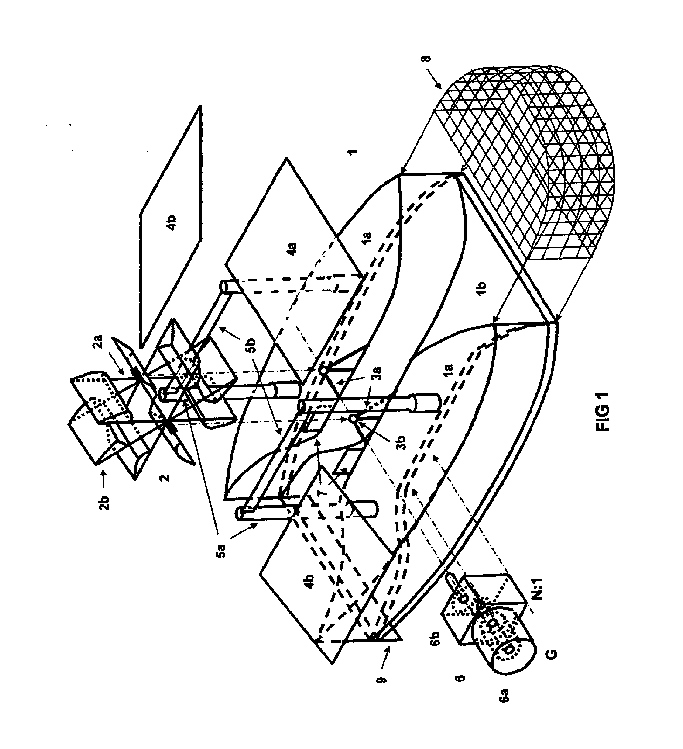

Figure 1 represents the agglomeration of the main components in isometric view

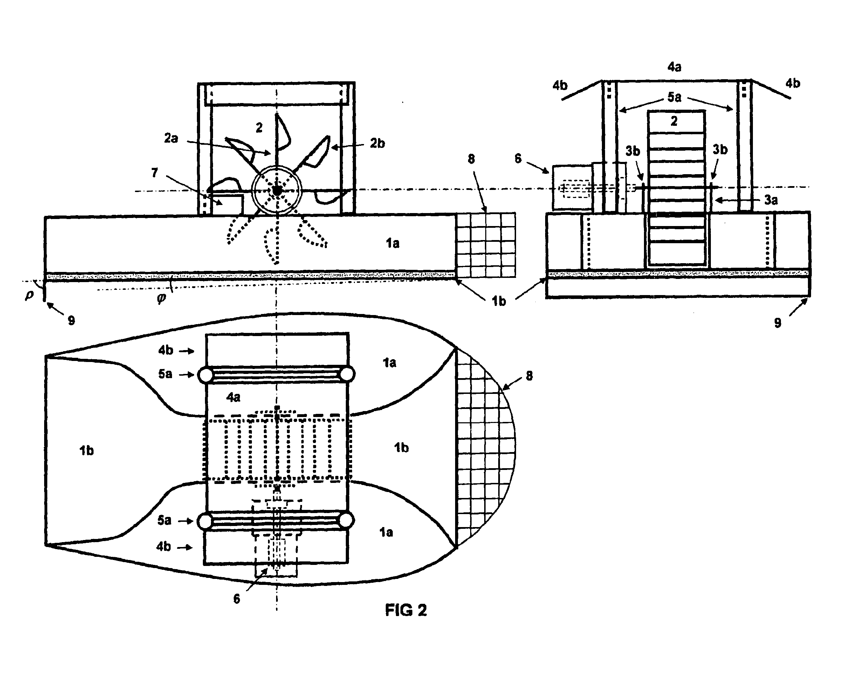

Figure 2 represents the projections of the overall set

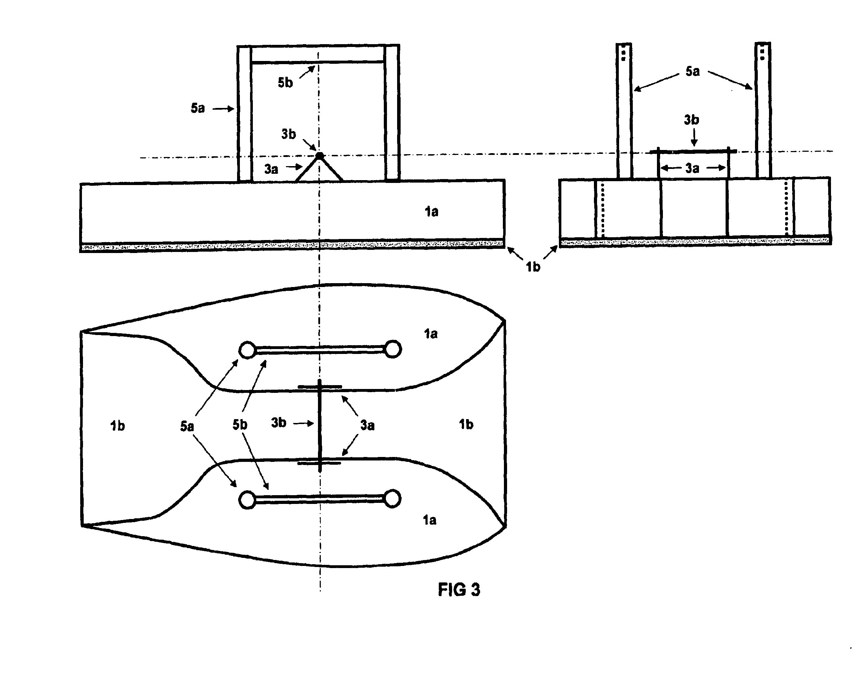

Figure 3 represents the projections of the set including the floats connected together with the floor plane and with the mounts for the bridge and for the water wheel

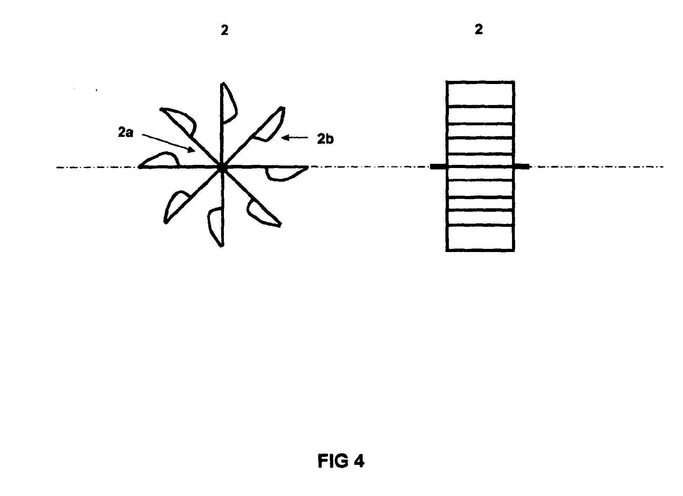

Figure 4 represents the projections of the water wheel

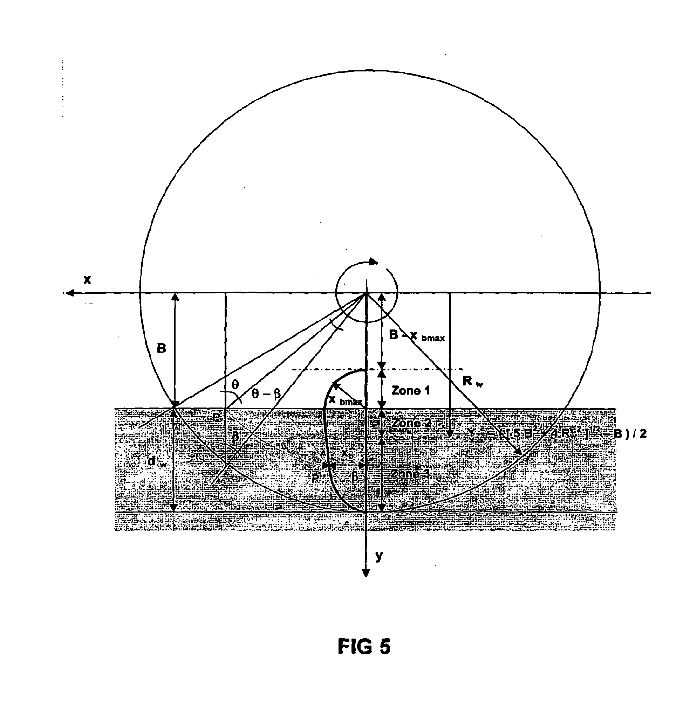

Figure 5 represents the geometry of the water wheel buckets profile

The channel is composed basically by three zones. By an inlet concentration zone, where the width of the channel decreases with a quadratic variation and where the distance between the external float sides and the plane of symmetry of the channel increases with a quadratic variation. By an intermediate zone where the channel is narrower with a constant minimal width wₜ and where the distance between the external float sides and the plane of symmetry of the channel decreases slightly with an almost linear variation being the magnitude of the angle defined between the plane of symmetry of the channel and the external float sides not higher than ten degrees. By an outlet diffusion zone comprising three zones the first next to the said intermediate zone where the channel width increases by a first average rate, further a second zone where the channel width increases with a second average rate higher than the average rate of increase in the first zone and a third zone near the channel exit section where the channel width increase is almost null, and where the distance between the external float sides and the plane of symmetry of the channel decreases slightly with an almost linear variation with the same amplitude as at the channel intermediate zone. All the dimensions of the catamaran and water wheel are referred to the width wₜ of the channel at the intermediate zone where the channel is narrower.

The ratio (wᵢ/wₜ) between the width wᵢ of the channel at the entrance section and the width wₜ of the channel at the intermediate zone where the channel is narrower assumes a value between 2,6 and 3,1. The ratio (wₒ/wₜ) between the width wₒ of the channel at the exit section and the width wₜ of the channel at the intermediate zone where the channel is narrower assumes a value between 2,9 and 3,5. The ratio (wₑ/wₜ) between the maximum distance among both external float sides wₑ and the width wₜ of the channel at the intermediate zone where the channel is narrower assuming a value between 4,5 and 4,8.

The length Iᵢ of the portion of the channel at inlet compression zone is about 1,7 times higher than the width wₜ of the channel at the intermediate zone where the channel is narrower. The length Iₜ of the portion of the channel at the intermediate zone where the channel is narrower is from 2,4 to 3 to times higher than width wₜ of the channel in that zone. The length Iₒ of the portion of the channel at outlet depression zone is about 2,4 times higher than the width wₜ of the channel at the intermediate zone where the channel is narrower.

The ratio (h_{f}/d_{f}) between the high h_{f} of the floats from the floor plane to their top surface and depth d_{f} of the floats bellow the water surface is greater than 1,15, being d_{f} given by (M/{p wₜ [2,5 wₒ + 1,78 wᵢ]}) where M corresponds to the total mass of all components including the two floats, floor plane, water wheel and its mounts, generator(s), bridge and its mounts and predicted temporary loadings, ρ to the cubic density of the water, wₜ to the width of the channel at the intermediate zone where the channel is narrower, wᵢ to the width of the channel at the entrance cross section and wₒ to the width of the channel at the exit cross section.

The low head water wheel (2) comprises a shaft armature (2a) and 8 or more buckets (2b), being the water wheel radius R_{w} from 1,2 to 1,5 times higher than the width wₜ of the channel at the intermediate zone where the channel is narrower.

The width w_{b} of the water wheel buckets (2b) is a little bit smaller than the width wₜ of the channel at the intermediate zone where the channel is narrower. The high h_{b} of the water wheel buckets is equal to (d_{w} + x_{bmax}) where d_{w} is the maximum depth of the water wheel bellow the water surface and x_{bmax} the maximum profile depth of the bucket. The bucket profile depth x_{b} curvature when it is in the water on a vertical position this is when the bucket aperture surface is perpendicular to the water surface defined by three zones of curvature, the first zone of curvature including the points of the bucket aperture surface at a distance Y from the water wheel axis between (B - x_{bmax}) and B corresponding B to the difference (R_{w} - d_{w}) between the water wheel radius R_{w} and the maximum depth d_{w} of the water wheel bellow the water surface, where the bucket profile depth curvature is defined by a quadratic increase in the bucket profile depth x_{b}, the second zone of curvature including the points of the bucket aperture surface at a distance Y from the water wheel axis between B and {([5 B² + 4 R_{w}²]^{1/2} - B)/2}, where the bucket profile depth curvature is defined by a slight decrease of the bucket profile depth x_{b} and the third zone of curvature including the points of the bucket aperture at a distance Y from the water wheel axis between {([5 B² + 4 R_{w}²]^{1/2} - B)/2} and R_{w} where the bucket profile curvature is given by the locus of the points obtained by rotating counter the normal water wheel rotation way the water surface points at a distance X equal to (R_{w}² ― Y²)^{1/2} from the bucket aperture surface with and angle given by {arctan (X/Y)}.

The point over the bucket curvature corresponding to the limit between zone 2 and zone 3, for which the projection over the bucket aperture surface is at a distance given by {([5 B² + 4 R_{w}²]^{1/2} - B)/2} from the water wheel axis, is given rotating counter the normal water wheel rotation way by an angle β the point P over the water surface for which the difference between the angle θ given by {arctan (X/B)} and the angle β takes the maximum value.

Attached to external float sides there are slot holes where fit stakes to fix the catamaran to the riverbed, at the external and top sides of the floats or at the bottom side of the floats there are nails where ropes, cables or chains are tied to anchor the catamaran on river sides or on the riverbed.

At the channel intermediate zone, there are blades (7) collinearly lined with the internal float sides, serving as mud wall barriers against splashing and sprinkling of water by the water wheel buckets diving in and leaving out the water surface, in order to reduce the amount of humidity at the float top sides.

Each of the two bridge mounts (5) contains a fixed part (5a) that stands on a vertical position connected to the top part of each float and a movable part (5b) that stands on a horizontal position having on the top slot holes where fit the central (4a) and respective side (4b) bridge trays that can be connected to the fixed part at several positions to set the high of the central bridge tray (4a), the lowest position with enough high to keep the central bridge tray at some high above the water wheel.

Each of the water wheel mounts (3) contains a fixed (3a) part that stands on a vertical position connected to the top part of each float and a movable part (3b) connected to the fixed part at several highs having at the top part ball bearings where fit the water wheel shaft edges that attach with transmission gearing to the electrical generator fixed at the top part of the floats, the lowest position having enough high to keep the water wheel lower extremity at some high above the floor plane avoiding to touch on it.

The floats (1a) and floor plane (1b) have chambers and cavities that can be filled with a material with density higher than the water density to set the maximum depth of the water wheel buckets bellow the water surface.

Immediately before the channel entrance cross section stands a metallic net barrier (8) formed by a grid of metal string with specific size apertures to avoid the entrance of fish and floating objects of greater size into the channel, attached to the bow of both floats (1a) and to floor plane (1b), the vertical surface of the barrier perpendicular to the water surface, with a convex curvature relatively to the channel cross section entrance.

The floor plane (1b) inclination angle ϕ can be adjusted in order to have a slight linear increase in the depth of the channel from the channel entrance section to the channel outlet section with a maximum angle of increase of 10°.

Bellow the floor plane edge close to the channel outlet there is a blade (9) having a width equal to the channel outlet section width, offering resistance to the flow of water bellow the floor plane, increasing the depression verified at the outlet and thus the channel net head. The blade inclination angle *ρ* may be adjusted taking values between 0° and 90-*ϕ* in order to regulate the depression verified at the channel outlet.

## Claims

1. Catamaran with hydroreactor profile for creating a net head, that stands anchored at the middle of a river tied to the river sides by means of cables and fixed to the riverbed by means of stakes, comprising two floats (1a) sustaining a water wheel (2) moved by the flow of water passing between the floats (1a) driving one or more electrical generator(s) (6) fixed on the top surface of one or both float(s), caracterised in that:
the profiled floats (1a) stand attached to a floor plane (1b) symmetrically apart from each other, the space between the floats (1a) above the floor plane (1b) defining an efficient channel with planar symmetry, the floats (1a) corresponding to the edges and the floor plane (1 b) to the floor of the channel,
the channel comprising an inlet concentration zone where the width of the channel decreases with a quadratic variation, an intermediate narrower zone where the water wheel (2) is located defined by a minimal and constant channel width value, where water flows with higher strength than the river stream strength, and an outlet' zone of diffusion comprising three zones the first next to the said intermediate zone where the channel width increases with a slight first average rate, further a second zone where the channel width increases with a second average rate higher than the average rate of increase in the first zone and a third zone near the channel exit section where the channel width increase is almost null, the distance between the external float sides and the plane of symmetry of the channel increases with a quadratic variation at the inlet zone and decreases slightly with the same linear variation at the intermediate and outlet zones being the magnitude of angle defined between the plane of symmetry of the channel and the external float sides not higher than ten degrees, the ratio wᵢwₜ between the width wᵢ of the channel at the entrance section and the width wₜ of the channel at the intermediate zone where the channel is narrower assuming a value between 2,6 and 3,1, the ratio wₒ/wₜ between the width wₒ of the channel at the exit section and the width wₜ of the channel at the intermediate zone where the channel is narrower assuming a value between 2,9 and 3,5, the ratio wₑ/wₜ between the maximum distance among both external float sides wₑ and the width wₜ of the channel at the intermediate zone where the channel is narrower assuming a value between 4,5 and 4,8,
the length lᵢ of the portion of the channel at inlet compression zone being about 1,7 times higher than the width wₜ of the channel at the intermediate zone where the channel is narrower, the length Iₜ of the portion of the channel at the intermediate zone where the channel is narrower being from 2,4 to 3 to times higher than width wₜ of the channel in that zone and the length lₒ of the portion of the channel at outlet depression zone being about 2,4 times higher than the width wₜ of the channel at the intermediate zone where the channel is narrower,
the ratio h_{f}/d_{f} between the height h_{f} of the floats from the floor plane to their top surface and depth d_{f} of the floats below the water surface is greater than 1,15, being d_{f} given by M/{ρ wₜ [2,5 wₒ + 1,78 wᵢ]} where M corresponds to the total mass of all components, ρ to the density of the water, wₜ to the width of the channel at the intermediate zone where the channel is narrower, wᵢ to the width of the channel at the entrance cross section and wₒ to the width of the channel at the exit cross section,
a efficient low head water wheel (2) is used comprising a shaft armature (2a) with a radius R_{w} from 1,2 to 1,5 times higher than the width wₜ of the channel at the intermediate zone where the channel is narrower, and 8 or more buckets (2b), each bucket (2b) defined by a width w_{b} a little bit smaller than the width wₜ of the channel at the intermediate zone where the channel is narrower, an height h_{b} equal to d_{w} + x_{bmax} where d_{w} is the maximum depth of the water wheel below the water surface and x_{bmax} the maximum profile depth of the bucket, the bucket profile depth x_{b} curvature when the backet is in the water on a vertical position, this is when the bucket aperture surface is perpendicular to the water surface being defined by three zones of curvature, the first zone of curvature including the points of the bucket aperture surface at a distance Y from the water wheel axis between B - x_{bmax} and B, corresponding B to the difference R_{w} -d_{w} between the water wheel radius R_{w} and the maximum depth d_{w} of the water wheel bellow the water surface, where the bucket profile depth curvature is defined by a quadratic increase in the bucket profile depth x_{b}, the second zone of curvature including the points of the bucket aperture surface at a distance Y from the water wheel axis between B and ([5B² + 4 R_{w}²]^{1/2} - B)/2, where the bucket profile depth curvature is defined by a slight decrease of the bucket profile depth x_{b} and the third zone of curvature including the points of the bucket aperture at a distance Y from the water wheel axis between ([5 B² + 4 R_{w}²]^{1/2} - B)/2 and R_{w} where the bucket profile curvature is given by the locus of the points obtained by rotating counter the normal water wheel rotation way the water surface points at a distance X equal to (R_{w}² - Y²)^{1/2} from the bucket aperture surface with and angle given by arctan (X/Y).

2. Catamaran with hydroreactor profile for creating a net head, according to claim 1 caracterised in that, comprising a bridge (4) that can be easily assembled to allow pedestrian or light loadings to cross between river sides, sustained by two mounts (5), the bridge (4) comprising one middle tray (4a) between the bridge mounts (5) and two side trays (4b) from each mount to the river side, each mount (5) comprising a fixed part (5a) that stands on a vertical position connected to the top part of each float (1 a) and a movable part (5b) that stands on a horizontal position having on the top slot holes where fit the bridge central tray (4a) and respective side tray (4b), that can be connected to the fixed part (5a) at several positions to set the high of the central bridge tray (4a), the lowest position enough high to keep the central bridge tray (4a) at some high above the water wheel (2).

3. Catamaran with hydroreactor profile for creating a net head, according to claim 1 caracterised in that, the said low head water wheel (2) is sustained by two mounts (3), each of the water wheel mounts (3) comprising a fixed part (3a) that stands on a vertical position connected to the top part of each float and a movable part (3b) connected to the fixed part at several highs having at the top part ball bearings where fit the water wheel shaft edges that attach with transmission gearing to the electrical generator(s) (6) fixed at the top part of the floats, the lowest position having enough high to keep the water wheel lower extremity at some high above the floor plane (1b) avoiding to touch on it.

4. Catamaran with hydroreactor profile for creating a net head, according to claim 1 caracterised in that, the floats (1a) and floor plane (1b) having chambers and cavities that can be filled with a material of density higher than the water density to set the maximum depth of the water wheel buckets bellow the water surface.

5. Catamaran with hydroreactor profile for creating a net head, according to claim 1 caracterised in that, comprising two blades (7), each blade collinearly lined with the internal side of each float, the blades serving as mud wall barriers against splashing and sprinkling of water by the water wheel buckets (2b) diving in and leaving out the water surface, in order to reduce the amount of humidity at the float top sides.

6. Catamaran with hydroreactor profile for creating a net head according to claim 1 caracterised in that, immediately before the channel entrance cross section stands a metallic net barrier (8) formed by a grid of metal string with specific size apertures to avoid the entrance of fish and floating objects of greater size into the channel, attached to the bow of both floats (1a) and to the floor plane (1b), the vertical surface of the barrier perpendicular to the water surface, with a convex curvature relatively to the channel entrance cross section.

7. Catamaran with hydroreactor profile for creating a net head, according to claim 1 caracterised in that, the floor plane (1 b) inclination angle ϕ can be adjusted to allow that the depth of the channel increases linearly from the channel entrance section to the channel outlet section with a maximum angle of 10° and in that bellow the floor plane edge close to the channel outlet there is a blade (9) having a width equal to the channel outlet section width, that offers resistance to the flow of water bellow the floor plane, increasing the depression verified at the outlet and thus the channel net head, the blade with a inclination angle p that may be adjusted taking values between 0° and 90-ϕ in order to regulate the depression verified at the channel outlet.

## Patentansprüche

1. Katamaran mit dem Profil eines Hydroreaktors zur Erzeugung einer Fallhöhe, inmitten eines Flusses verankert, mit Kabeln an den Ufern befestigt und durch Pfähle im Flussbett fixiert, umfassend zwei Schwimmer (1a), die ein Wasserrad (2) tragen, das von der Kraft der zwischen den Schwimmern (1a) herrschenden Strömung bewegt wird und dabei einen ou mehrere, auf einem oder beiden Schwimmern befestigte(n) elektrische(n) Generator(en) (6) antreibt, **dadurch gekennzeichnet, daß** die Schwimmer (1a) ein bestimmtes Profil aufweisen und voneinander mit einem Abstand symmetrisch auf einer Basisplattform (1b) befestigt sind, wobei der Raum zwischen den Schwimmern (1a) und über der Basisplattform (1b) einen leistungfähigen Kanal mit ebener Symmetrie bildet und die Schwimmer (1a) den Rändern und die Basisplattform (1b) dem Kanalbett entsprechen, der Kanal sich zusammensetzt aus einem Bereich der Konzentration stromaufwärts, wo die Kanalbreite quadratisch abnimmt, aus einem mittleren Bereich, in dem die Kanalbreite konstant ist und dabei ein Minimum annimmt, und einem Depressionsbereich stromabwärts, der von drei Verbreiterungsbereichen besteht, deren erster dem mittleren Bereich benachbart ist, in dem der Kanal sich mit einer mittleren Steigerungsrate verbreitert, daran anschliessend ein zweiter Bereich, in dem die Kanalbreite mit einer mittleren Steigerung grösser wird, die erheblich über der mittleren Steigerung im ersten Bereich liegt, und einem dritten, dem Kanalausgang benachbarten Bereich, in dem seine Breite nur ganz leicht zunimmt, der Abstand zwischen den Aussenseiten jedes Schwimmers und der Symmetrieebene des Kanals im Eingangsbereich stromaufwärts quadratisch zunimmt und im mittleren und im Depressionsbereich stromabwärts praktisch linear abnimmt mit derselben Steigung im mittleren Bereich und derselben Depression stromaufwärts, wobei die Amplitude des zwischen der Symmetrieebene des Kanals und den Aussenseiten der Schwimmer kleiner als zehn Grad ist,
das Verhältnis (wᵢ/wₜ) zwischen der Kanalbreite wᵢ in seinem Eingangsbereich und der Kanalbreite wₜ im mittleren, engeren Bereich einen Wert zwischen 2,6 und 3,1 annimmt;
das Verhältnis (wₒ/wₜ) zwischen der Kanalbreite wₒ im Eingangsbereich und der Kanalbreite wₜ im mittleren, engeren Bereich, einen Wert zwischen 2,9 und 3,5 annimmt, das Verhältnis (wₑ/wₜ) zwischen dem zwischen den Aussenflächen der beiden Schwimmer und dem Abstand wₜ des Kanals im mittleren, engeren Bereich definierten maximalen Abstand w_{c} einen Wert zwischen 4,5 und 4,8 annimmt;
die Länge lᵢ zwischen dem stromaufwärts im Kompressionsbereich gelegenen Teil des Kanals etwa 1,7 mal grösser ist als die Kanalbreite wₜ in seinem mittleren, engeren Bereich, die Länge lₜ des Kanals in seinem mittleren, engeren Bereich zwischen 2,4 und 3 mal grösser ist als die Breite wₜ des Kanals im selben Bereich und dass die Länge lₒ des stromabwärts im Kompressionsbereich gelegenen Teils des Kanals etwa 2,4 mal grösser als die Breite wₜ des Kanals in seinem mittleren, engeren Bereich ist;
das Verhältnis (h_{f}/d_{f}) zwischen der Höhe h_{f} der Schwimmer von der Basisplattform bis zu seiner Oberfläche und der Unterwasser-Tiefe d_{f} der Schwimmer grösser als 1,15 ist, wobei d_{f} durch (M/{ρwₜ [2,5 wₒ + 1,78 wᵢ]}) gegeben ist, wo M der Gesamtmasse aller Komponenten entspricht, p der Massendichte des Wassers, wₜ der Kanalbreite im mittleren, engeren Bereich, wᵢ der Kanalbreite in seinem Eingangsbereich und Wₒ der Kanalbreite in seinem Ausgangsbereich;
wobei das Wasserrad (2) das Gestell für die Achse (2a) mit einem Durchmesser R_{w} umfasst, der zwischen 1,2 und 1,5 mal grösser ist als die Breite wₜ des Kanals im mittleren, engeren Bereich, und 8 oder mehr Schaufeln (2b), die eine Breite w_{b} besitzen, die ein wenig geringer ist als die Breite wₜ des Kanals im mittleren, engeren Bereich, eine Höhe hb, gegeben durch die Summe (d_{w} + x_{bmax}) der maximalen Unterwassertiefe d_{w} des Wasserrads und der maximalen Dicke x_{bmax} des Schaufelprofils, wobei die Krümmung oder das Profil der Dicke x_{b} der Schaufeln, wenn diese sich in vertikaler Position unter Wasser befinden bzw. wenn die Oberfläche der Schaufelöffnung senkrecht zur Wasseroberfläche ist, durch drei Krümmungsbereiche definiert ist, wobei der erste Krümmungsbereich die Punkte der Oberfläche der Schaufelöffnung einschliesst, die sich in einer Entfernung Y von der Achse des Wasserrads zwischen (B - x_{bmax}) und B befinden, wobei B der Differenz (R_{w} - d_{w}) zwischen dem Radius R_{w} des Wasserrads und der maximalen Unterwassertiefe d_{w} des Wasserrads entspricht und wobei die Krümmung des Schaufelprofils definiert ist durch eine quadratische Zunahme seiner Dicke x_{b}, der zweite Krümmungsbereich die Punkte der Oberfläche der Schaufelöffnung einschliesst, die sich in einer Entfernung Y von der Achse des Wasserrads zwischen B und {([5 B² + 4 R_{w}²]^{1/2} - B)/2} befinden, wobei die Krümmung des Schaufelprofils definiert ist durch eine geringfügige Abnahme seiner Dicke x_{b}, und schliesslich durch einen dritten Krümmungsbereich, der die Punkte der Oberfläche der Schaufelöffnung einschliesst, die sich in einer Entfernung Y von der Achse des Wasserrads zwischen {([5B² + 4R_{w}²]^{1/2} - B)/2} und R_{w} befinden, wobei die Krümmung des Schaufelprofils gegeben ist durch den Ort der Punkte, die erhalten werden, wenn man die Punkte der Wasseroberfläche, die sich in einer Entfernung X, gegeben durch (R_{w}² - Y²)^{1/2}, von der Oberfläche der Schaufelöffnung in einem Winkel, der gegeben ist durch {arctan (X/Y)}, entgegen der Rotationsrichtung des Wasserrads dreht.

2. Katamaran mit dem Profil eines Hydroreaktors zur Erzeugung einer Fallhöhe nach Anspruch 1, **dadurch gekennzeichnet, dass** er eine leicht zu montierende Brücke (4) umfasst, die Fussgängern und leichten Lasten das Überqueren von den Seiten aus erlaubt, wobei die Brücke von Stützen (5) getragen wird und die Brücke (4) aus einer zentralen Platte (4a) zwischen den beiden Stützen (5) und zwei seitlichen Platten (4b) besteht, die von jeder Stütze zu der entsprechenden Seite führen und wobei jede Stütze (5) einen festen Teil (5a), der in senkrechter Position am Oberteil (Top) von jedem Schwimmer befestigt ist, und einen beweglichen Teil (5b) umfasst, der in waagerechter Lage gehalten wird und oben Nuten besitzt, in die die zentrale (4a) und die entsprechenden seitlichen Platten (4b) der Brücke eingreifen, welche an dem feststehenden Teil (5a) in unterscheidlichen Höhen befestigt werden kann, um so die Höhe der zentralen Platte (4a) festzulegen, wobei die niedrigste Höhe ausreicht, damit die zentrale Platte (4a) der Brücke in einem gewissen Abstand über dem höchsten Punkt des Wasserrads (2) positioniert ist.

3. Katamaran mit dem Profil eines Hydroreaktors zur Erzeugung einer Fallhöhe nach Anspruch 1, **dadurch gekennzeichnet, dass** das erwähnte Wasserrad (2) mit niedriger Fallhöhe von zwei Stützen (3) getragen wird, die einen festen Teil (3a) umfassen, der in senkrechter Position am Oberteil (Top) jedes Schwimmers befestigt ist, und einen beweglichen Teil (3b), der am festen Teil (3a) in verschiedenen höhen befestigt werden kann und in seinem oberen Teil Kugellager hat, in denen jeweils ein Ende der Wasserradwelle gelagert ist, welche mit Hilfe von Getriebekästen mit dem/den elektrischen Generator(en) (6) verbunden ist, die sich auf dem Oberteil der Schwimmer (1a) befinden, in einer Minimalhöhe, die ausreicht, damit das untere Ende des Wasserrads eine gewisse Höhe über der Basisplattform (1b) einhält und diese nicht berührt.

4. Katamaran mit dem Profil eines Hydroreaktors zur Erzeugung einer Fallhöhe nach Anspruch 1, **dadurch gekennzeichnet, dass** die beiden Schwimmer (1a) und die Basisplattform (1b) Kammern und Hohlräume enthalten, die mit einem Material grösserer Dichte als die Dichte des Wassers gefüllt werden können, um so die maximale Unterwassertiefe der Wasserradschaufeln einzustellen.

5. Katamaran mit dem Profil eines Hydroreaktors zur Erzeugung einer Fallhöhe nach Anspruch 1, **dadurch gekennzeichnet, dass** er im mittleren Bereich des Kanals zwei Schutzbleche (7) enthält, wobei jedes dieser Bleche kollinear zur Innenseite jedes Schwimmers ist und die Schutzbleche als Barriere gegen die von den Wassertadschaufeln (2b) beim Eintauchen oder Auftauchen aus dem Wasser verursachten Wasserspritzer dienen, so dass die auf der Schovimmeroberfläche vorhandene Feuchtigkeit verringert wird.

6. Katamaran mit dem Profil eines Hydroreaktors zur Erzeugung einer Fallhöhe nach Anspruch 1, **dadurch gekennzeichnet, dass** unmittelbar vor dem Eingangsbereich des Kanals eine Drahtgitterbarriere (8) aus einem Drahtgeflecht mit Öffnungen bestimmter Grösse vorhanden ist, um das Eindringen von Fischen und grösseren schwimmenden Objekten in den Kanal zu verhindern, und die am Vorderteil der beiden Schwimmer (1a) und an der Basisplattform (1b) befestigt ist, wobei die zur Wasseroberfläche senkrechte vertikale Fläche der Barriere eine konvexe Krümmung in Bezug auf den Eingangsbereich des Kanals aufweist.

7. Katamaran mit dem Profil eines Hydroreaktors zur Erzeugung einer Fallhöhe nach Anspruch 1, **dadurch gekennzeichnet, dass** die Neigung ϕ der Basisplattform (1b) so justiert werden kann, dass die Kanaltiefe von seinem Eingangsbereich bis zu seinem Ausgangsbereich linear mit einem maximalen Winkel von 10° zunimmt und dass auf dem Unterteil des Basisplattformendes am Ausgang des Kanals ein Blech (9) von gleicher Breite wie die Breite des Kanals im Ausgangsbereich vorhanden ist, das dem Abfluss unter der Basisplattform einen Widerstand entgegensetzt, um so die am Ausgang des Kanals festzustellende Depression und damit die Fallhöhe des Kanals zu erhöhen, wobei der Neigungswinkel p des Bleches auch so justiert werden kann, dass er zur Regulierung der am Ausgang geschaffenen Depression Werte zwischen 0° und 90-ϕ annimmt.

## Revendications

1. Catamaran profilé comme un hydro réacteur pour la création de chute maintenu ancré au sein d'une rivière, attaché aux marges au moyen de câbles et fixé au lit au moyen de pieux contenant deux flotteurs (1a) soutenant une roue hydraulique (2) entraînée par la force de l'écoulement entre les flotteurs (1a) entraînant un ou plus générateurs électriques (6) fixés en dessus d'un flotteur ou en dessus des deux **caractérisé en ce que** les flotteurs (1a) présentent un profil déterminé et qui sont fixés a un plancher de base (1b) symétriquement éloignés entre eux, l'espace entre les flotteurs (1a) et au dessus du plancher de base (1b) définissant un canal efficace, présentant symétrie planaire, les flotteurs (1a) correspondant aux bords et le plancher de base au lit du canal, le canal se composant par une zone de concentration en amont où la largeur du canal diminue de forme quadratique, par une zone intermédiaire ou la largeur du canal est constante prenant une valeur minimale et par une zone de dépression en aval formée par trois zones d'élargissement, la première plus proche de la zone intermédiaire où la largeur du canal augmente selon une pente, se suivant à celle-ci une seconde zone où la largeur du canal augmente présentant une pente moyenne sensiblement supérieur à la pente moyenne de augmentation dans la première zone et par une troisième zone proche de la section de sortie du canal ou l'augmentation de sa largeur est très légère, la distance entre les cotés extérieures de chaque flotteur et le plan de symétrie augmente de forme quadratique dans la zone d'entrée en amont et diminue légèrement de manière pratiquement linéaire avec la même pente dans les zones intermédiaires et de dépression en aval, l'amplitude de l'angle défini entre le plan de symétrie du canal et les cotés extérieurs des flotteurs étant inférieur à dix degrés,
le rapport (wᵢ/wₜ) entre la largeur wᵢ du canal sur sa section d'entrée et la largeur wₜ du canal dans la zone intermédiaire où ceci est plus étroit prenant une valeur entre 2,6 et 3,1;
le rapport (w₀/wₜ) entre la largeur w₀ dans la section de sortie et la largeur wₜ du canal dans la zone intermédiaire où ceci est plus étroit prenant une valeur entre 2,9 et 3,5 et le rapport (wₑ/w_{f}) entre la distance maximale w_{c} définie entre les surfaces extérieures des deux flotteurs et la distance wt du canal dans la zone intermédiaire où ceci est plus étroit prenant une valeur entre 4,5 et 4,8;
la longueur lᵢ entre la portion du canal dans la zone de compression en amont étant approximativement 1,7 fois supérieure que la largeur wt du canal dans la zone intermédiaire où ceci est plus étroit, la longueur lₜ da la portion du canal dans la zone intermédiaire où ceci est plus étroit étant entre 2,4 jusqu'à 3 fois supérieure à la largeur wt du canal dans la même zone et **en ce que** la longueur l₀ da la portion du canal dans la zone de dépression en aval étant approximativement 2,4 fois supérieure à la largeur wt du canal dans la zone intermédiaire où ceci est plus étroit;
le rapport (h_{f}/d_{f}) entre l'hauteur h_{f} des flotteurs à partir du plancher de base jusqu'à sa surface supérieure et la profondeur d_{f} des flotteurs submergée étant supérieure que 1,15, d_{f} étant donnée par (M/{ρwₜ [2,5 w₀ + 1,78 wᵢ]}) où M correspond à la masse totale de tous les composants, p à la densité cubique de l'eau, wₜ à la largeur du canal dans la zone intermédiaire où ceci est plus étroit, wᵢ à la largeur du canal dans sa section d'entrée et w₀ à la largeur du canal dans sa section de sortie;
la roue hydraulique (2) contenant la structure de l'axe (2a) avec un rayon R_{w} entre 1,2 jusqu'à 1,5 fois supérieure à la largeur wₜ du canal dans la zone intermédiaire où ceci est plus étroit et 8 augets ou plus (2b) possédant une largeur w_{b} légèrement inférieure à la largeur wt du canal dans la zone intermédiaire où ceci est plus étroit, une hauteur h_{b} donnée para la somme (d_{w} + x_{bmax}) entre la profondeur maximale d_{w} da la roue hydraulique submergée et l'épaisseur maximale x_{bmax} do profil des augets, la courbure ou le profil de l'épaisseur x_{b} des augets quand ceux-ci se trouvent dans la position verticale submergée, c'est-à-dire quand la surface d'ouverture des augets est perpendiculaire à la surface de l'eau étant définie par trois zones de courbure, la première zone de courbure incluant les points de la surface de ouverture des augets à une distance Y de l'axe de la roue hydraulique entre (B - x_{bmax}) et B où B correspond à la différence (R_{w} - d_{w}) entre (B - x_{bmax}) et B où B correspond à la différence (R_{w} - d_{w}) entre le rayon de la roue hydraulique R_{w} et la profondeur maximale d_{w} de la roue hydraulique submergée, où la courbure du profil des augets est définie par une augmentation quadratique de son épaisseur x_{b}, la seconde zone de courbure incluant les points de la surface de ouverture des augets à une distance Y de l'axe de la roue hydraulique entre B et {([5 B² + 4 R_{w}²]^{1/2} - B)/2}, où la courbure du profil des augets est définie par une légère diminution de son épaisseur x_{b}, et finalement par une troisième zone de courbure incluant les points de la surface de ouverture des augets à une distance Y de l'axe de la roue hydraulique entre {([5 B² + 4 R_{w}²]^{1/2} B)/2} et R_{w} où la courbure du profil des augets est donnée par l'endroit des points obtenus par rotation dans le sens contraire au sens de rotation de la roue hydraulique les points de la surface de l'eau à une distance X donnée par (R_{w}² - Y²)^{1/2} de la surface d'ouverture des augets d'un angle donné par {tan⁻¹ (X/Y)}.

2. Catamaran profilé comme un hydro réacteur pour la création de chute, selon la revendication 1, **caractérisé en ce qu'**il contient un pont (4) facilement montée qui permet la traversée de randonnés et de charges légères entre les marges soutenue par des supports (5), le pont (4) étant composée par un tablier de pont central (4a) entre les deux supports (5) et deux tabliers de pont latéraux (4b) de chaque support pour la marge correspondante, chaque support (5) contenant une partie fixe (5a) maintenue dans une position verticale liée à la partie supérieure (sommet) de chaque flotteur et une partie mouvante (5b) maintenue dans une position horizontale contenant à son sommet des encaissements où encaissent les tabliers de pont centrale (4a) e latéral (4b) respectif du pont, qui peut être fixée à la partie fixe (5a) à plusieurs hauteurs pour l'établissement de l'hauteur du tablier de pont central du pont (4a), l'hauteur la plus baisse étant suffisante pour que le tablier de pont central du pont (4a) reste positionné à une cote en dessus du sommet de la roue hydraulique (2).

3. Catamaran profilé comme un hydro réacteur pour la création de chute, selon la revendication 1, **caractérisé en ce que** la dite roue hydraulique de baisse chute (2) est soutenue par deux supports (3) contenant une partie fixe (3a) maintenue dans une position verticale qui est fixée à la partie supérieure (sommet) de chaque flotteur et une partie mouvante (3b) qui peut être fixée sur la partie fixe (3a) à plusieurs hauteurs contenant dans sa partie supérieure des roulements où encaisse chaque extrémité de l'axe da la roue hydraulique qui connecte au moyen de caisses d'engrenages à un ou plusieurs générateurs électriques (6) localisés dans la partie supérieure des flotteurs (1a), l'hauteur plus baisse étant suffisante pour que l'extrémité inférieure de la roue hydraulique reste à une hauteur déterminée au-dessus du plancher de base (1b) ne pas touchant ceci.

4. Catamaran profilé comme un hydro réacteur pour la création de chute, selon la revendication 1, **caractérisé en ce que** les deux flotteurs (1a) et le plancher de base (1b) contiennent des chambres et des cavités que puissent être remplies avec un matériel de densité supérieure à la densité de l'eau de manière a s'établir la profondeur maximale des augets de la roue hydraulique en dessous de la surface de l'eau.

5. Catamaran profilé comme un hydro réacteur pour la création de chute, selon la revendication 1, **caractérisé en ce que** dans la zone intermédiaire du canal il contient deux platines de protection (7) chaque platine alignée de manière colinéaire avec la partie intérieure de chaque flotteur, les platines de protection servant de barrières aux gouttelettes de l'eau causées par les augets de la roue hydraulique (2b) à l'entrée ou à la sortie de l'eau de manière à réduire la quantité d'humidité existante au sommet des flotteurs.

6. Catamaran profilé comme un hydro réacteur pour la création de chute, selon la revendication 1, **caractérisé en ce que** jusqu'avant la section d'entrée du canal il existe une barrière de filet métallique (8) formée par une maille de fil de fer avec des ouvertures d'une dimension déterminée de manière à éviter l'entrée de poissons et d' objets flottants plus grandes que la dimension supérieure du canal, fixée à la partie frontal des deux flotteurs (1a) et au plancher de base (1b), la surface verticale de la barrière perpendiculaire à la surface de l'eau, présentant une courbure convexe par rapport à la section d'entrée du canal.

7. Catamaran profilé comme un hydro réacteur pour la création de chute, selon la revendication 1, **caractérisé en ce que** l'inclinaison ϕ du plancher de base (1b) peut être réglée de manière à ce que la profondeur du canal augmente linéairement a partir de sa section d'entrée jusqu'à sa section de sortie avec un angle maximale de 10° et **en ce que** dans la partie inférieure de l'extrémité du plancher de base à la sortie du canal il existe une platine (9) de largeur égale à la largeur du canal dans la section de sortie, offrant résistance à l'écoulement par la partie inférieure du plancher de base, de manière à augmenter la dépression vérifiée à la sortie du canal et ainsi la chute du canal, pouvant aussi l'angle d'inclinaison p de la platine être réglé de manière a prendre des valeurs entre 0° et 90-ϕ pour le réglage de la dépression crée la sortie.
